# EUROPEAN PATENT APPLICATION

(11) **EP 1 405 588 A1**
(43) Date of publication of application: **07.04.2004**
(21) Application number: 02756029.1
(22) Date of filing: 09.07.2002
(51) Int. Cl.: A47J 27/56

(54) **CULINARY NOZZLE**

(30) Priority: 10.07.2001 RU 2001118996
(71) Applicant: Mechl, Elena Georgievna, Moscow, 115569 (RU)
(72) Inventor: Mechl, Elena Georgievna, Moscow, 115569 (RU)
(74) Representative: Andrae, Steffen, Dr.
(86) International application number: PCT/RU2002/000328
(87) International publication number: WO 2003/005867

(57) **Abstract**

The invention relates to home appliances and can be used together with kitchenware. The inventive culinary nozzle comprises a receiving container (1), a sieve (2) mounted thereon and covering it, an enclosure (3) fixed to outside of receiving container (1), thereby forming a pass (4). A guide tab is embodied in such a way that it partially covers the sieve (2). At least one hole (8) is embodied in the bottom part of the receiving container (1) in such a way that the particles passed through the sieve (2) are unable to pass therethrough.

## Description

### Technical field

The invention relates to household appliances and is intended for use with cooking battery.

### Prior art

Known in the art is a cooking adapter comprising a receiving container and a sieve mounted thereon and closing the container inlet, a casing secured outside the receiving container, in which the internal surface of the casing and the external surface of the container are located so as to form a through passage communicating the space above the sieve with the space under the receiving container, and a guide flange located on the internal surface of the casing along the perimeter above the through passage (cf. useful model RU 14818 of 10.09.2000 - analogue and prior art).

A disadvantage of the prior art cooking adapter is that the guide flange incompletely beats off the foam into the sieve and also in that a portion of the product being cooked (broth etc.) is removed as a waste product.

### Disclosure of the invention

A basic object of the invention is to increase the convenience of running the adapter.

The essence of the invention consists in that the claimed cooking adapter comprises a receiving container and a sieve mounted thereon and closing the container inlet, a casing secured outside the receiving container, the internal surface of the casing and the external surface of the container being arranged so as to form a through passage communicating the space above the sieve with the space under the receiving container, and a guide flange located on the internal surface of the casing along the perimeter above the through passage, the guide flange having such a width that in the plan it partially overlaps the sieve, and the bottom of the receiving container having at least one hole of such a size that the particles having passed through the sieve could not pass through this hole.

### Brief description of the drawings.

The invention is further described by way of example with reference to the accompanying drawings, in which:

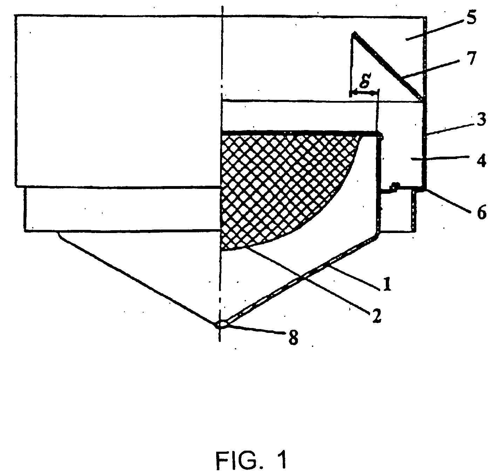

Fig. 1 is a general view of the cooking adapter according to the invention.

### Best embodiment of the invention

The cooking adapter has a receiving container 1 and a sieve 2, secured on the inlet of the receiving container and overlapping it. A casing 3 is installed outside of receiving container 1. The external surface of the container 1 and the internal surface of the casing 3 form a through passage 4 communicating a space 5 in the casing 3 above the sieve 2 with a space of the cooking vessel under the receiving container 1.

The casing 3 may be provided with an external support flange 6 and a guide flange 7 located on its internal surface along the perimeter above the through passage 4. The guide flange 7 has such a width that in plan it at least partially overlaps the sieve. In the drawing it is indicated by a value 6, which represents the difference between the smaller diameter of the guide flange and the external diameter of the sieve. It allows one to direct the foam exclusively into the sieve and not upwards and beyond the guide flange, where it could otherwise be accumulated.

The receiving container 1 has at least one hole 8 through which the liquid accumulated therein can flow down back into the cooking vessel thereby separating the valuable product from the foam. Several such holes can be made. In so doing they should be of such a size that the particles of foam, scale, etc., which have penetrated into the container 1 through the sieve, could. not pass through these holes.

The claimed adapter operates as follows.

The cooking adapter is put into a saucepan or another cooking vessel (not shown) for boiling or cooking. In so doing the adapter rests with the flange 6 on the upper edge of the saucepan and is covered by a cover (not shown) of the cooking vessel.

At the moment of simmer the frothed mass and liquid rise up in the through passage 4 and, by interacting with the guide flange 7, get in the receiving container 1 through the sieve 2 thereby preventing expiration from under the cover of the cooking vessel under the steam pressure and providing filtering of the liquid incoming into the receiving container 1.

Thus, the application of the cooking adapter allows one to improve the quality of cooked food and provides cleanliness of the workplace thus increasing safety of operation.

### Industrial applicability

The invention can be used in a food-processing industry and in private life.

## Claims

1. A cooking adapter comprising a receiving container (1) and a sieve (2) secured thereon and overlapping it, a casing (3) installed outside of the receiving container (1), the external surface of the container (1) and the internal surface of the casing (3) forming a through passage (4) communicating the space above the sieve (2) with the space under the receiving container (1), and a guide flange (7) disposed on the internal surface of the casing (3) along the perimeter above the through passage (4), **characterized in that** the guide flange (7) has such a width that in plan it partially overlaps the sieve (2); the bottom of the receiving container (1) has at least one hole (8) of such a size that the particles which have penetrated through the sieve (2) could not pass through it.
